(19) **Europäisches Patentamt / European Patent Office / Office européen des brevets**

(11) **EP 4 078 802 B1**

(12) # FASCICULE DE BREVET EUROPEEN

(45) Date de publication et mention de la délivrance du brevet:
**13.08.2025 Bulletin 2025/33**

(21) Numéro de dépôt: **20819767.3**

(22) Date de dépôt: **09.12.2020**

(51) Classification Internationale des Brevets (IPC):
*H02P 6/06* *(2006.01)*      *H02P 6/16* *(2016.01)*
*H02P 6/17* *(2016.01)*      *H02P 29/50* *(2016.01)*

(52) Classification Coopérative des Brevets (CPC):
**H02P 29/50; H02P 6/06; H02P 6/16; H02P 6/17**

(86) Numéro de dépôt international:
**PCT/EP2020/085206**

(87) Numéro de publication internationale:
**WO 2021/122193 (24.06.2021 Gazette 2021/25)**

(54) **PROCEDE DE DETERMINATION DE LA POSITION ET/OU DE LA VITESSE D'UN ROTOR D'UNE MACHINE ELECTRIQUE PAR TRAITEMENT DES SIGNAUX D'UN CAPTEUR DE POSITION**

VERFAHREN ZUR BESTIMMUNG DER POSITION UND/ODER DER GESCHWINDIGKEIT EINES ROTORS EINER ELEKTRISCHEN MASCHINE DURCH VERARBEITUNG DER SIGNALE EINES POSITIONSSENSORS

METHOD FOR DETERMINING THE POSITION AND/OR THE SPEED OF AN ELECTRIC MACHINE ROTOR BY PROCESSING THE SIGNALS OF A POSITION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2019 FR 1914641**

(43) Date de publication de la demande:
**26.10.2022 Bulletin 2022/43**

(73) Titulaire: **IFP Energies nouvelles**
**92852 Rueil-Malmaison (FR)**

(72) Inventeurs:
• **TRINH, Ngoc-Tu**
  **92852 RUEIL-MALMAISON CEDEX (FR)**
• **VIDAL-NAQUET, Fabien**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A2- 2 387 145      US-A1- 2017 284 826**

• **LARA JORGE ET AL: "A Novel Algorithm Based on Polynomial Approximations for an Efficient Error Compensation of Magnetic Analog Encoders in PMSMs for EVs", IEEE TRANSACTIONS ON INDUSTRIAL ELECTRONICS, IEEE SERVICE CENTER, PISCATAWAY, NJ, USA, vol. 63, no. 6, 1 June 2016 (2016-06-01), pages 3377 - 3388, XP011609626, ISSN: 0278-0046, [retrieved on 20160510], DOI: 10.1109/TIE.2016.2524409**

## Description

### Domaine technique

La présente invention concerne le domaine de la détermination de la position et/ou de la vitesse d'un rotor d'une machine électrique.

La connaissance précise de la position angulaire et/ou de la vitesse angulaire d'un rotor de machine électrique est utile notamment pour le contrôle et pour la surveillance des machines électriques. En effet, pour le contrôle de telles machines électriques, notamment pour le contrôle du couple et/ou de la vitesse de rotation, la position et/ou la vitesse du rotor sont souvent des données indispensables.

Il existe une grande variété de capteurs de position qui ont été développés pour cette application, parmi lesquels on peut citer notamment les capteurs magnétostrictifs, les encodeurs, les résolveurs, les capteurs GMR (basé sur la magnéto résistance géante de l'anglais « Giant Magnetoresistance Effect »), les capteurs inductifs. De tels capteurs peuvent générer deux signaux, un premier signal du type cosinusoïdal et un deuxième signal du type sinusoïdal, à partir desquels on reconstruit la position et/ou la vitesse du rotor.

Idéalement ces signaux devraient avoir la même amplitude, aucun décalage (offset), et devraient être orthogonaux (avec un déphasage strictement égal à 90 °). Toutefois, ces signaux peuvent comprendre des harmoniques, qui lors de la reconstruction de la position et/ou la vitesse du rotor, peuvent générer des imprécisions importantes pour la détermination de la position ou de la vitesse du rotor. En outre, il peut également exister un déphasage entre ces deux signaux (lié par exemple à la position du capteur de position), qui peuvent également générer une erreur pour la détermination de la position ou de la vitesse du rotor. Ces imprécisions et ces erreurs ont un impact important sur le contrôle de la machine électrique ou sur la surveillance de la machine électrique. En effet, une erreur sur la position du rotor peut, par exemple, engendrer une consigne de couple non adaptée à l'utilisation de la machine électrique, ou peut engendrer des harmoniques de couple, etc.

### Technique antérieure

Afin de limiter l'impact des harmoniques et du déphasage, plusieurs solutions techniques ont été développées.

Par exemple, la demande de brevet DE 102014226604 décrit un procédé de correction de la position angulaire du rotor. Ce procédé utilise la mesure de deux capteurs de position situés à 90° l'un de l'autre autour du rotor, et réalise une estimation d'une valeur de correction qui est fonction de la différence des phases des signaux issus des deux capteurs de position. Toutefois, ce procédé permet de corriger uniquement le déphasage et non les harmoniques.

La demande de brevet DE 102016220188 décrit un procédé de correction de mesures de capteur de rotation générant des signaux sinus et cosinus, au moyen d'une correction statique et d'une correction dynamique. La correction statique est basée sur des tables, et la correction dynamique est prévue pour prendre en compte la différence d'amplitude entre les signaux et les différences d'offset. Toutefois, ce procédé ne permet pas de corriger en continu les harmoniques. En outre, l'utilisation de tables risque de ne pas apporter une correction optimale et nécessite une préparation de tables complexes, qui peuvent dépendre notamment de la vitesse de rotation et de la charge de la machine électrique.

La demande de brevet US 2019/0031046 concerne l'élimination de l'offset de signaux de mesures de la position d'une machine électrique. Cette méthode est basée sur l'ajout et la soustraction de signaux et sur l'utilisation d'intégrateurs au moyen d'un filtre d'état de mouvement (de l'anglais « motion-state filter »). Cette méthode permet par conséquent d'éliminer uniquement les offsets ne permet pas de déterminer et d'éliminer les harmoniques.

La demande de brevet EP2387145 décrit une méthode de suppression de perturbation pour le contrôle d'un moteur à vitesse variable, dans laquelle on applique une reconstruction de Fourier et une boucle à verrouillage de phase sans correction de déphasage

La demande de brevet US2017/284826 décrit une méthode pour interpoler des mesures de position d'un encodeur, sans boucle à verrouillage de phase.

### Résumé de l'invention

La présente invention a pour but déterminer la vitesse et la position d'un rotor, de manière précise, sans erreur. L'invention concerne un procédé de détermination de la vitesse angulaire et/ou de la position angulaire d'un rotor d'une machine électrique, au moyen d'une détermination des harmoniques, qui est mise en œuvre au moyen d'une boucle fermée qui comporte un observateur des harmoniques, une correction du déphasage, et une première boucle à verrouillage de phase qui estime la position du rotor.

En outre, l'invention concerne un procédé de détermination de la vitesse et/ou de la position d'un rotor de machine électrique en déterminant de manière précise les harmoniques, en corrigeant en continu les signaux de mesure uniquement lorsque l'observateur des harmoniques est convergent, les signaux corrigés étant utilisés pour déterminer la position et/ou la vitesse du rotor. La détermination des harmoniques est mise en œuvre au moyen d'une boucle fermée qui comporte un observateur des harmoniques, une correction du déphasage, et une première boucle à verrouillage de phase qui estime la position du rotor.

L'invention concerne un procédé de détermination de la position et/ou de la vitesse d'un rotor d'une machine électrique au moyen d'un capteur de position dudit rotor, ledit capteur de position générant un signal cosinusoïdal et un signal sinusoïdal. Pour ce procédé, on met en œuvre une boucle fermée qui comporte un observateur d'état des harmoniques, une correction dudit déphasage desdits signaux générés cosinusoïdal et sinusoïdal, et une première boucle à verrouillage de phase PLL, ledit observateur d'état desdits harmoniques reliant lesdits signaux générés cosinusoïdal et sinusoïdal et une valeur de ladite position du rotor estimée par ladite première boucle à verrouillage de phase PLL auxdits harmoniques, ladite correction dudit déphasage identifiant et corrigeant le déphasage desdits signaux générés cosinusoïdal et sinusoïdal au moyen desdits harmoniques déterminés par ledit observateur d'état desdits harmoniques, et ladite première boucle à verrouillage de phase PLL estimant la position et/ou la vitesse dudit rotor à partir desdits signaux cosinusoïdal et sinusoïdal corrigés.

Selon un mode de réalisation, on met en œuvre les étapes suivantes :

a) On détermine les harmoniques desdits signaux générés cosinusoïdal et sinusoïdal au moyen de ladite boucle fermée qui comporte ledit observateur d'état desdits harmoniques, ladite correction dudit déphasage desdits signaux générés cosinusoïdal et sinusoïdal, et ladite première boucle à verrouillage de phase PLL ;
b) On détermine si ledit observateur d'état desdits harmoniques est convergent ;
c) On corrige en continu lesdits signaux générés cosinusoïdal et sinusoïdal en mettant à jour lesdites harmoniques déterminées lorsque ledit observateur d'état desdits harmoniques est convergent ; et
d) On détermine ladite position et/ou ladite vitesse dudit rotor au moyen d'une deuxième boucle à verrouillage de phase PLL à partir desdits signaux cosinusoïdal et sinusoïdal corrigés.

Avantageusement, on détermine si ledit observateur d'état desdits harmoniques est convergent en vérifiant l'équation : $\sqrt{|y_a - \hat{y}_a|^2 + |y_b - \hat{y}_b|^2} < \varepsilon$ avec $y_a$ et $y_b$ lesdits signaux générés cosinusoïdal et sinusoïdal, $\hat{y}_a$ et $\hat{y}_b$ les signaux desdits signaux reconstruits au moyen de ladite position estimée et $\varepsilon$ un seuil prédéterminé.

De préférence, lesdites première et deuxième boucles à verrouillage de phase PLL comprennent un régulateur proportionnel intégral, et un intégrateur.

De manière avantageuse, la fonction de transfert desdites première et deuxième boucles à verrouillage de phase

$$\frac{\hat{\theta}(s)}{\theta(s)} = \frac{1 + \frac{K_p}{K_i} * s}{1 + \frac{K_p}{K_i} * s + \frac{1}{K_i} * s^2}$$

PLL s'écrit : avec $\theta$ la position dudit rotor, $\hat{\theta}$ la position estimée dudit rotor, s le paramètre de Laplace, $K_p$ le coefficient proportionnel dudit régulateur proportionnel intégral, $K_i$ le coefficient dudit régulateur proportionnel intégral.

Conformément à une mise en œuvre, ledit coefficient intégral $K_i$ de ladite première boucle à verrouillage de phase est inférieur audit coefficient intégral $K_i$ de ladite deuxième boucle à verrouillage de phase.

Selon un aspect, on corrige lesdits signaux cosinusoïdal et sinusoïdal par un filtrage desdits harmoniques déterminés, et par éventuellement une correction du déphasage desdits signaux cosinusoïdal et sinusoïdal.

Selon une caractéristique, ledit observateur d'état desdits harmoniques met en œuvre une fonction de transfert :

$$\frac{\hat{y}_k}{y} = \frac{\frac{\alpha * s}{s^2 + (k * \omega)^2}}{1 + \sum_{k=0 \to n} \frac{\alpha * s}{s^2 + (k * \omega)^2}}$$

avec s le paramètre de Laplace, $\alpha$ un gain, k l'ordre de l'harmonique considéré, n le nombre d'harmoniques desdits signaux cosinusoïdal et sinusoïdal, w la fréquence fondamentale, y le signal généré considéré parmi le signal cosinusoïdal et sinusoïdal, et $\hat{y}_k$ l'harmonique estimé d'ordre k dudit signal généré considéré parmi le signal cosinusoïdal et sinusoïdal.

Conformément à un mode de réalisation, ledit gain $\alpha$ est inférieur à ladite fréquence fondamentale, de préférence ledit gain $\alpha$ est inférieur au dixième de ladite fréquence fondamentale $\omega$.

Selon une option de réalisation, ledit observateur d'état desdits harmoniques détermine en outre lesdits coefficients fondamentaux desdits harmoniques et lesdits offsets desdits signaux générés cosinusoïdal et sinusoïdal.

Selon une mise en œuvre, on identifie ledit déphasage entre lesdits signaux générés cosinusoïdal et sinusoïdal aux moyens desdits coefficients fondamentaux desdits harmoniques au moyen d'une fonction arctangente.

Avantageusement, on détermine ledit déphasage Φ entre lesdits signaux générés cosinusoïdal et sinusoïdal au

$$\phi = \text{atan}\left(\frac{L_{1b} * \sin(\phi)}{L_{1b} * \cos(\phi)}\right)$$

moyen de l'équation :                                   avec $L_{1b} * \sin(\phi) = -\hat{L}_{11b} * \cos(\Delta\theta) - \hat{L}_{12b} * \sin(\Delta\theta)$ $L_{1b} * \cos(\phi) = \hat{L}_{12b} * \cos(\Delta\theta) - \hat{L}_{11b} * \sin(\Delta\theta)$, et avec $L_{1b}$ le coefficient fondamental d'un desdits signaux générés cosinusoïdal et sinusoïdal, $\hat{L}_{11b}$ et $\hat{L}_{12b}$ les coefficients fondamentaux déterminés par ledit observateur d'état desdits harmoniques, $\Delta\theta$ la différence entre la position dudit rotor mesurée et la position dudit rotor estimé par ladite première boucle à verrouillage de phase PLL.

Selon un mode de réalisation, on corrige ledit déphasage d'un desdits signaux générés cosinusoïdal et

$$y_{fb-correction} = L_{1b} * \frac{y_{fb} - \frac{y_{fa}}{L_{1a}} * (L_{1b} * \sin(\phi))}{(L_{1b} * \cos(\phi))}$$

sinusoïdal au moyen de l'équation                                       avec $y_{fb-correction}$ le fondamental dudit signal généré corrigé d'un desdits signaux générés cosinusoïdal et sinusoïdal, $L_{1a}$ et $L_{1b}$ les coefficients fondamentaux desdits signaux générés cosinusoïdal et sinusoïdal, $y_{fa}$ et $y_{fb}$ les fondamentaux desdits signaux générés mesurés cosinusoïdal et sinusoïdal, et Φ ledit déphasage.

Selon un aspect, ledit capteur de position est un capteur magnétostrictif, un capteur inductif, un encodeur, un capteur GMR, un capteur AMR, un capteur TMR ou un résolveur.

En outre, l'invention concerne un procédé de contrôle d'une machine électrique, ladite machine électrique comprenant un capteur de position du rotor de ladite machine électrique, ledit capteur de position générant un signal cosinusoïdal et un signal sinusoïdal, dans lequel on met en œuvre les étapes suivantes :

    a) On détermine ladite position et/ou ladite vitesse dudit rotor au moyen dudit procédé selon l'une des caractéristiques précédentes et desdits signaux générés par ledit capteur de position ; et

    b) On contrôle ladite machine électrique en fonction de ladite position et/ou de ladite vitesse prédéterminée.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1 illustre les étapes du procédé selon un premier mode de réalisation de l'invention.

La figure 2 illustre les étapes du procédé selon un deuxième mode de réalisation de l'invention.

La figure 3 illustre la construction d'une boucle à verrouillage de phase selon un mode de réalisation de l'invention.

La figure 4 illustre la vitesse de rotation de référence pour un exemple d'application du procédé selon l'invention.

La figure 5 illustre la vitesse de rotation déterminée par le procédé selon un mode de réalisation de l'invention pour l'exemple d'application de la figure 4.

La figure 6 illustre l'erreur de position entre la position de référence et la position déterminée par le procédé selon un mode de réalisation pour l'exemple d'application de la figure 4.

## Description des modes de réalisation

La présente invention concerne la détermination de la position d'un rotor d'une machine électrique. La machine électrique est équipée d'un capteur de position angulaire qui, lors de la mesure, génère un signal cosinusoïdal et un signal sinusoïdal. Dans la suite de la description, ces deux signaux sont appelés signaux de mesure. En outre, dans la suite de la description, on appelle position, la position angulaire du rotor, et on appelle vitesse, la vitesse angulaire du rotor. La présente invention est adaptée à toute machine électrique pour laquelle on mesure la position. La présente invention est particulièrement adaptée aux machines synchro-réluctantes assistées d'aimants permanents, qui sont très sensibles à la mesure de la postion.

Le capteur de position peut être choisi parmi les capteurs magnétostrictifs, les capteurs inductifs, les encodeurs et les résolveurs, un capteur GMR (basé sur la magnéto résistance géante de l'anglais « Giant Magnetoresistance »), un capteur AMR (basé sur la magnéto résistance anisotropique de l'anglais « Anisotropic Magnetoresistance »), un capteur TMR (basé sur la magnéto résistance à effet tunnel de l'anglais « Tunnel Effect Magnetoresistance») ou tout autre capteur apte à générer un signal de mesure cosinusoïdal et un signal de mesure sinusoïdal.

On appelle harmonique un élément de décomposition primaire d'une fonction périodique, ici la fonction périodique correspond aux signaux de mesure. On appelle fondamental l'harmonique d'ordre un des signaux de mesure, c'est-à-dire le premier harmonique. On appelle offset le décalage continu des signaux de mesure.

De préférence, le procédé selon l'invention peut mettre en œuvre un seul capteur de position, limitant ainsi les imprécisions liées à la multiplication des capteurs, et à la difficulté de positionner précisément plusieurs capteurs.

Selon un premier mode de réalisation, le procédé peut mettre en œuvre une boucle fermée permettant de déterminer les harmoniques des signaux de mesure et d'en déduire la position et/ou la vitesse du rotor. La boucle fermée sera décrite en détail en relation avec l'étape 1) dans la suite de la description. Les étapes de la boucle fermée peuvent être mises en œuvre par un système informatique ou électronique, notamment un système informatique ou électronique qui contrôle la machine électrique.

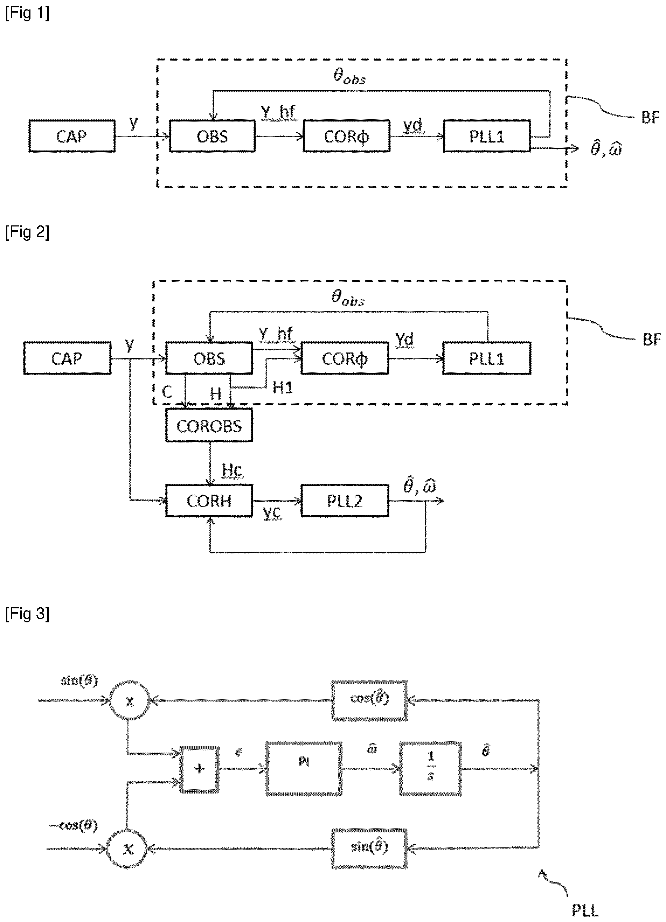

La figure 1 illustre, schématiquement et de manière non limitative, les étapes du procédé selon le premier mode de réalisation de l'invention. Dans un premier temps, le capteur de position CAP génère les signaux de mesure y. Ensuite, on détermine les harmoniques des mesures au moyen d'une boucle fermée BF, qui comporte un observateur d'état des harmoniques OBS, un correcteur de déphasage CORΦ et une première boucle à verrouillage de phase PLL1. L'observateur d'état des harmoniques OBS détermine les harmoniques à partir des signaux de mesure y et de la position du rotor estimée $\theta_{obs}$ par la première boucle à verrouillage de phase PLL1. L'observateur d'état des harmoniques OBS détermine également les signaux y_hf, formés par la suppression des harmoniques d'ordre strictement supérieur à 1 des signaux de mesure y. Le correcteur de déphasage CORΦ identifie et corrige le déphasage ainsi que l'offset et l'amplitudes des signaux de mesure y_hf pour former un signal corrigé yd à partir des harmoniques identifiées. La première boucle à verrouillage de phase PLL1 estime une position du rotor estimée $\theta_{obs}$ à partir du signal corrigé yd. Pour ce premier mode de réalisation, la position et/ou la vitesse du rotor estimées sont obtenues par la première boucle à verrouillage de phase PLL1.

Le procédé selon le deuxième mode de réalisation de l'invention comporte les étapes suivantes :

1) Détermination des harmoniques
2) Détermination de la convergence de l'observateur des harmoniques
3) Correction des harmoniques observées
4) Correction des signaux de mesure
5) Détermination de la position et/ou la vitesse du rotor

Ces étapes seront détaillées dans la suite de la description. Ces étapes peuvent être mises en œuvre par un système informatique ou électronique, notamment un système informatique ou électronique qui contrôle la machine électrique.

La figure 2 illustre, schématiquement et de manière non limitative, les étapes du procédés selon le deuxième mode de réalisation de l'invention. Dans un premier temps, le capteur de position CAP génère les signaux de mesure y. Ensuite, on détermine les harmoniques des mesures au moyen d'une boucle fermée BF, qui comporte un observateur d'état des harmoniques OBS, un correcteur de déphasage CORΦ et une première boucle à verrouillage de phase PLL1. L'observateur d'état des harmoniques OBS détermine les harmoniques H à partir des signaux de mesure y et de la position du rotor estimée $\theta_{obs}$ par la première boucle à verrouillage de phase PLL1. L'observateur d'état des harmoniques OBS détermine également les signaux y_hf, formés par la suppression des harmoniques d'ordre strictement supérieur à 1 des signaux de mesure y. Le correcteur de déphasage CORΦ identifie et corrige le déphasage ainsi que l'offset et l'amplitude des signaux de mesure y_hf pour former un signal corrigé yd à partir des harmoniques H identifiées. La première boucle à verrouillage de phase PLL1 estime une position du rotor estimée $\theta_{obs}$ à partir du signal corrigé yd. En outre, le procédé selon l'invention comprend une étape de correction des harmoniques COROBS si la convergence C de l'observateur d'état des harmoniques OBS est assurée. Les harmoniques corrigées sont notées Hc. En outre, le procédé selon l'invention concerne une étape de suppression des harmoniques CORH du signal de mesure y à partir des harmoniques corrigées déterminées Hc. Le signal corrigé est noté yc. De plus, le procédé selon l'invention comprend une deuxième boucle à verrouillage de phase PLL2 qui estime la position $\hat{\theta}$ du rotor et/ou la vitesse du rotor $\hat{\omega}$ à partir du signal yc. Selon un mode de réalisation de l'invention, le procédé peut comporter en outre une rétroaction de la position estimée $\hat{\theta}$ par la deuxième boucle à verrouillage de phase PLL2 pour la correction des harmoniques CORH. Pour ce deuxième mode de réalisation, la position et/ou la vitesse du rotor estimée sont obtenues par la deuxième boucle à verrouillage de phase PLL2.

## 1. Détermination des harmoniques

Lors de cette étape, on détermine les harmoniques des signaux de mesure du capteur de position au moyen d'une boucle fermée. On appelle boucle fermée une succession d'étapes pour laquelle une des sorties des étapes sert également d'entrée d'au moins une autre étape qui la précède. En d'autres termes, la boucle fermée comprend au moins une rétroaction.

La boucle fermée comporte :

- Un observateur d'état des harmoniques, qui relie les signaux de mesure et la position estimée du rotor aux harmoniques des signaux de mesure, et filtre des signaux de mesure les harmoniques d'ordre strictement supérieur à 1,
- Un correcteur de déphasage, qui identifie et corrige l'amplitude, l'offset et la phase des signaux de mesure filtrés au moyen des harmoniques d'ordre inférieur ou égal à 1, déterminés par l'observateur d'état des harmoniques,
- Une première boucle à verrouillage de phase, qui estime la position du rotor à partir des signaux corrigés, et
- Une rétroaction de la position estimée par la première boucle à verrouillage phase vers une entrée de l'observateur d'état des harmoniques.

Un observateur d'état est une extension d'un modèle représenté sous forme de représentation d'état. Lorsque l'état d'un système n'est pas mesurable, on conçoit un observateur qui permet de reconstruire l'état à partir d'un modèle du système dynamique et des mesures d'autres grandeurs.

Une boucle à phase asservie, ou boucle à verrouillage de phase (en anglais, « phase-locked loop », ou PLL), est un montage électronique ou informatique permettant d'asservir la phase ou la fréquence de sortie d'un système sur la phase ou la fréquence du signal d'entrée. Elle peut aussi asservir une fréquence de sortie sur un multiple de la fréquence d'entrée.. La première boucle à verrouillage de phase permet de mieux identifier les harmoniques.

Selon un mode de réalisation de l'invention, l'observateur d'état des harmoniques peut mettre en œuvre, pour chaque harmonique d'ordre k, une fonction de transfert de la forme:

$$\frac{\hat{y}_k}{y} = \frac{\dfrac{\alpha * s}{s^2 + (k * \omega)^2}}{1 + \sum_{k=0 \to n} \dfrac{\alpha * s}{s^2 + (k * \omega)^2}}$$

avec s le paramètre de Laplace, $\alpha$ un gain de l'observateur d'état, k l'ordre de l'harmonique considéré, n le nombre d'harmoniques des signaux de mesure, w la fréquence fondamentale avec $\theta = \omega * t$, $\theta$ étant la position angulaire, y le signal généré considéré parmi le signal cosinusoïdal et sinusoïdal, et $\hat{y}_k$ l'harmonique estimé d'ordre k du signal généré considéré parmi le signal cosinusoïdal et sinusoïdal.

De manière avantageuse, le gain de l'observateur d'état $\alpha$ peut être déterminé de manière à être inférieur à la fréquence fondamentale w. De préférence, le gain de l'observateur d'état $\alpha$ peut être inférieur au dixième de la fréquence fondamentale w. Le gain $\alpha$ permet de régler la convergence de l'observateur d'état des harmoniques. Selon un exemple de réalisation, le gain $\alpha$ peut valoir 10. Cette valeur permet une convergence rapide sans déformation significative du signal observé.

Selon un mode de réalisation, la fonction de transfert peut être déterminée au moyen des opérations suivantes : Les signaux de mesure, notés respectivement $y_a$ et $y_b$, qui comprennent des harmoniques, peuvent s'écrire :

$y_a = L_{0a} + L_{1a} \sin(\theta) + L_{2a} \sin(2\theta + \phi_{a2}) + L_{3a} \sin(3\theta + \phi_{a2}) + \cdots + L_{na} \sin(n\theta + \phi_{an})$

$y_b = L_{0b} + L_{1b} \cos(\theta + \phi) + L_{2b} \sin(2\theta + \phi_{b2}) + L_{3b} \sin(3\theta + \phi_{b2}) + \cdots + L_{nb} \sin(n\theta + \phi_{bn})$

Ou encore :

$y_a = L_{0a} + L_{11a} \sin(\theta) + L_{12a} \cos(\theta) + L_{21a} \sin(2\theta) + L_{22a}\cos(2\theta) + L_{31a} \sin(3\theta) + L_{32a}\cos(3\theta) + \cdots + L_{n1a} \sin(n\theta) + L_{n2a}\cos(n\theta)$

$y_b = L_{0b} + L_{11b} \sin(\theta) + L_{12b} \cos(\theta) + L_{21b} \sin(2\theta) + L_{22b}\cos(2\theta) + L_{31b} \sin(3\theta) + L_{32b}\cos(3\theta) + \cdots + L_{n1b} \sin(n\theta) + L_{n2b}\cos(n\theta)$

Dans ces équations et dans la suite de la description, l'indice a désigne le premier signal de mesure (par exemple le signal cosinusoïdal), et l'indice b désigne le deuxième signal de mesure (par exemple le signal sinusoïdal). Dans ces équations, $\theta = \omega \times t$ avec w la fréquence fondamentale, $L_{11}a$, $L_{12}a$, $L_{11b}$, $L_{12b}$ les coefficients fondamentaux des signaux de mesure (c'est-à-dire les coefficients liés au fondamental des harmoniques), $L_{i1a}$, $L_{i2a}$, $L_{i1b}$, $L_{i2b}$ (avec i qui varie entre 2 et n, n étant l'harmoniques de plus haute fréquence considérée) les coefficients des harmoniques des signaux de mesure, $L_{0a}$ et $L_{0b}$ les offsets des signaux de mesure (c'est-à-dire les décalages continus).

Pour simplifier l'écriture, on peut noter les vecteurs L et W (sans les indices a et b) :

$$L = [L_0 \; L_{11} \; L_{12} \; L_{21} \; L_{22} \cdots L_{n1} \; L_{n2}]^T,$$

$$W = [1 \; \sin(\theta) \; \cos(\theta) \; \sin(2\theta) \; \cos(2\theta) \cdots \; \sin(n\theta) \; \cos(n\theta)]^T$$

Et on peut définir le vecteur de l'estimation des coefficients $\hat{L}$ de la manière suivante :

$$\hat{L} = \left[\widehat{L_0} \; \; \widehat{L_{11}} \; \; \widehat{L_{12}} \; \; \widehat{L_{21}} \; \widehat{L_{22}} \cdots \widehat{L_{n1}} \; \widehat{L_{n2}}\right]^T$$

On peut alors écrire :

$$y = L^T * W, \text{ et } \hat{y} = \hat{L}^T * W$$

D'après les documents suivants :

- Osowski, S. (1992). Neural network for estimation of harmonic components in a power system. IEEE Generation, Transmission and Distribution, (pp. 129-135). et
- Siyu Leng, W. L.-Y. (2009). Active Power Filter for Three-Phase Current. IEEE American Control Conference, (pp. 2140-2147). MO, USA.

On peut écrire :

$$\hat{L} = P * (y - \hat{y}) * W$$

Où P est la matrice diagonale de dimension (2n+1)*(2n+1) qui est définie par :

$$P = diag(\alpha)$$

Avec $\alpha$ le gain de l'observateur d'état.

L'estimateur des coefficients $\hat{L}$ peut alors s'écrire de la manière suivante :

$$\dot{\hat{L}_0} = \alpha * (y - \hat{y})$$

$$\dot{\hat{L}_{11}} = \alpha * (y - \hat{y}) * \sin(\theta)$$

$$\dot{\hat{L}_{12}} = \alpha * (y - \hat{y}) * \cos(\theta)$$

$$\dot{\hat{L}_{21}} = \alpha * (y - \hat{y}) * \sin(2\theta)$$

$$\dot{\hat{L}_{22}} = \alpha * (y - \hat{y}) * \cos(2\theta)$$

$$\dots$$

$$\dot{\hat{L}_{n1}} = \alpha * (y - \hat{y}) * \sin(n\theta)$$

$$\dot{\hat{L}_{n2}} = \alpha * (y - \hat{y}) * \cos(n\theta)$$

De ces équations, on peut extraire l'estimation de la partie fondamentale notée $\hat{y}_f$ en enlevant les harmoniques notées $\hat{y}_h$ et les offset notés $\hat{y}_{offset}$ :

$$\hat{y}_f = y - \hat{y}_h - \hat{y}_{offset}$$

où

$$\hat{y}_{offset} = \hat{L}_0 \text{ et } \hat{y}_h = \sum_{i=2}^{n} ( \hat{L}_{i1} \sin(i\theta) + \hat{L}_{i2} \cos(i\theta))$$

En utilisant la transformée Laplace pour former l'équation suivante :

$$y(t) - \hat{y}(t) = y(t) - \sum_{k=0}^{n} (\hat{y}_k(t)) \text{ où } y_k(t) = (\hat{L}_{k1} \sin(k * \theta) + \hat{L}_{k2} \cos(k * \theta))$$

Avec k le numéro d'ordre de l'harmonique. On peut alors écrire :

$$y(s) - \hat{y}(s) = y(s) - \sum_{k=0 \to n} \hat{y}_k(s)$$

Avec

$$\hat{y}_k(s) = \mathcal{L}(\hat{L}_{k1} \sin(k * \theta)) + \mathcal{L}(\hat{L}_{k2} \cos(k * \theta))$$

Avec $\mathcal{L}$ la transformée de Laplace.
On peut écrire :

$$\hat{y}_k(s) = \big(y(s) - \hat{y}(s)\big) * \frac{\alpha * s}{s^2 + (k * \omega)^2}$$

La fonction de transfert peut alors s'écrire pour chaque harmonique d'ordre k :

$$\frac{\hat{y}_k}{y} = \frac{\frac{\alpha * s}{s^2 + (k * \omega)^2}}{1 + \sum_{k=0 \to n} \frac{\alpha * s}{s^2 + (k * \omega)^2}}$$

Pour la fondamentale (k=1), la fonction de transfert entre la fondamentale $\hat{y}_f$ et la mesure y peut s'écrire :

$$H(s) = \frac{\hat{y}_f(s)}{y(s)} = \frac{1 + \frac{\alpha * s}{s^2 + \omega^2}}{1 + \sum_{k=0 \to n} \frac{\alpha * s}{s^2 + (k * \omega)^2}}$$

Conformément à une mise en œuvre de l'invention, l'observateur d'état des harmoniques peut déterminer en outre les coefficients fondamentaux desdits harmoniques et les offset des signaux de mesure.

Selon un mode de réalisation, pour l'étape de correction de déphasage, on peut identifier le déphasage entre les signaux de mesure, de préférence entre les fondamentaux des signaux de mesure, au moyen des coefficients fondamentaux des harmoniques. Cette identification du déphasage peut être mise en œuvre au moyen d'une fonction arctangente.

Avantageusement, on peut déterminer le déphasage $\Phi$ entre les fondamentaux des signaux de mesure au moyen des équations :

$$\phi = \mathrm{atan}\left(\frac{L_{1b} * \sin(\phi)}{L_{1b} * \cos(\phi)}\right)$$

En utilisant

$$L_{1b} * \sin(\phi) = -\hat{L}_{11b} * \cos(\Delta\theta) - \hat{L}_{12b} * \sin(\Delta\theta)$$

$$L_{1b} * \cos(\phi) = \hat{L}_{12b} * \cos(\Delta\theta) - \hat{L}_{11b} * \sin(\Delta\theta)$$

avec $L_{1b}$ le coefficient fondamental d'un desdits signaux générés cosinusoïdal et sinusoïdal, $\hat{L}_{11b}$ et $\hat{L}_{12b}$ les coefficients fondamentaux déterminés par ledit observateur d'état des harmoniques, $\Delta\theta$ la différence entre la position du rotor mesurée et la position du rotor estimée par ladite première boucle à verrouillage de phase PLL.

En effet, pour cette étape, on peut mettre en œuvre les opérations suivantes :
Avec l'hypothèse : $\hat{y}_{fa} = y_a$ et $\hat{y}_{fb} = y_b$, (l'indice f indiquant le fondamental), on peut écrire les équations suivantes :

$$\hat{L}_{11a} \sin(\hat{\theta}) + \hat{L}_{12a} \cos(\hat{\theta}) = L_{1a} * \sin(\theta)$$

$$\hat{L}_{11b} \sin(\hat{\theta}) + \hat{L}_{12b} \cos(\hat{\theta}) = L_{1b} * \cos(\theta + \phi)$$

Avec $\hat{\theta}$ la valeur estimée de la position du rotor (qui correspond à $\theta_{obs}$ sur la figure 1 ou sur la figure 2). Les coefficients de signaux fondamentaux $L_a$ et $L_b$ peuvent être calculées par les équations suivantes :

$$L_{1a} = \sqrt{\hat{L}_{11a}^2 + \hat{L}_{12a}^2} \; , L_{1b} = \sqrt{\hat{L}_{11b}^2 + \hat{L}_{12b}^2}$$

En posant $\theta = \hat{\theta} + \Delta\theta$, on peut écrire :

9

$$L_{1a} * \sin(\theta) = L_{1a} * \sin(\hat{\theta} + \Delta\theta) = L_{1a} * \sin(\hat{\theta}) * \cos(\Delta\theta) + L_{1a} * \cos(\hat{\theta}) * \sin(\Delta\theta),$$

et

$$L_{1b} * \cos(\theta + \phi) = L_{1b} * \cos(\hat{\theta} + \Delta\theta + \phi) =$$

$$= L_{1b} * \cos(\hat{\theta}) * \cos(\Delta\theta + \phi) - L_{1b} * \sin(\hat{\theta}) * \sin(\Delta\theta + \phi)$$

On peut alors obtenir :

$$\hat{L}_{11a} = L_{1a} * \cos(\Delta\theta) \ , \ \ \hat{L}_{12a} = L_{1a} * \sin(\Delta\theta)$$

$$\hat{L}_{11b} = -L_{1b} * \sin(\Delta\theta + \phi) \ , \ \ \hat{L}_{12b} = L_{1b} * \cos(\Delta\theta + \phi)$$

A partir de ces équations, on peut montrer que :

$$\cos(\Delta\theta) = \frac{\hat{L}_{11a}}{L_{1a}} \ , \ \ \ \ \sin(\Delta\theta) = \frac{\hat{L}_{12a}}{L_{1a}}$$

$$L_{1b} * \sin(\phi) = -\hat{L}_{11b} * \cos(\Delta\theta) - \hat{L}_{12b} * \sin(\Delta\theta)$$

$$L_{1b} * \cos(\phi) = \hat{L}_{12b} * \cos(\Delta\theta) - \hat{L}_{11b} * \sin(\Delta\theta)$$

En injectant les deux dernières équations, on peut identifier le déphasage Φ dans l'équation suivante :

$$\phi = \operatorname{atan}\left(\frac{L_{1b} * \sin(\phi)}{L_{1b} * \cos(\phi)}\right)$$

A partir du déphasage identifié, on peut corriger un des deux signaux de mesure pour éliminer le déphasage. Pour cela, on peut reconstruire un signal sans déphasage au moyen des valeurs déterminées des fondamentaux des harmoniques des signaux de mesure, des valeurs de coefficients fondamentaux, et de l'angle de déphasage identifié.
Selon un mode de réalisation de l'invention, on corrige le déphasage d'un desdits signaux de mesure au moyen de l'équation

$$y_{fb-correction} = L_{1b} * \frac{y_{fb} - \frac{y_{fa}}{L_{1a}} * (L_{1b} * \sin(\phi))}{(L_{1b} * \cos(\phi))}$$

avec $y_{fb-correction}$ le fondamental du signal de mesure considéré, $L_{1a}$ et $L_{1b}$ les coefficients fondamentaux des signaux de mesure, $y_{fa}$ et $y_{fb}$ les fondamentaux des signaux de mesure et Φ ledit déphasage.
En effet, par définition :

$$y_{fa} = L_{1a} * \sin(\theta) \ , y_{fb} = L_{1b} * \cos(\theta + \phi)$$

Et on souhaite établir le signal fondamental corrigé défini par :

$$y_{fb-correction} = L_{1b} * \cos(\theta)$$

Si on utilise le développement suivant :

$$\cos(\theta) = \frac{\cos(\theta + \phi) - \sin(\theta) * \sin(\phi)}{cos(\phi)}$$

On peut obtenir :

$$y_{fb-correction} = \frac{L_{1b} * \cos(\theta + \phi) - L_{1b} * \sin(\theta) * \sin(\phi)}{cos(\phi)}$$

En remplaçant par la définition des signaux fondamentaux, on peut avoir :

$$y_{fb-correction} = L_{1b} * \frac{y_{fb} - \frac{y_{fa}}{L_{1a}} * (L_{1b} * \sin(\phi))}{(L_{1b} * \cos(\phi))}$$

Selon un mode de réalisation de l'invention, la première boucle à verrouillage de phase peut comprendre notamment un régulateur proportionnel intégral, et un intégrateur.

De préférence, la première boucle à verrouillage de phase peut être conforme au mode de réalisation de la figure 3. Pour ce mode de réalisation, la première boucle à verrouillage de phase comprend en entrée un signal sinusoïdal $\sin(\theta)$ et un signal cosinusoïdal $-\cos(\theta)$. Le signal sinusoïdal $\sin(\theta)$ est multiplié par un signal correspondant au cosinus de la position angulaire estimée $\hat{\theta}$ (pour cette étape $\hat{\theta}$ correspond à $\theta_{obs}$ des figures 1 et 2) par la sortie de la première boucle à verrouillage de phase. Le signal cosinusoïdal $-\cos(\theta)$ est multiplié par un signal correspondant au sinus de la position angulaire estimée $\hat{\theta}$ par la sortie de la première boucle à verrouillage de phase. Les sorties des multiplicateurs sont ensuite additionnés. Ainsi, on obtient un signal $\varepsilon$ qui correspond à $sin(\theta) \times cos(\hat{\theta}) - cos(\theta) \times sin(\hat{\theta})$ qui est égal à $sin(\theta - \hat{\theta})$. Le signal $\varepsilon$ passe ensuite dans un régulateur proportionnel intégral PI pour estimer la vitesse de rotation du rotor $\hat{\omega}$. Le régulateur PI comporte un coefficient proportionnel noté $K_p$, et un coefficient intégrateur $K_i$. Ce signal est ensuite intégré dans un intégrateur, qui correspond à la fonction $\frac{1}{s}$ dans le domaine de Laplace, pour estimer la position du rotor $\hat{\theta}$.

Pour ce mode de réalisation, la fonction de transfert de la première boucle à verrouillage de phase peut s'écrire :

$$\frac{\hat{\theta}(s)}{\theta(s)} = \frac{1 + \frac{K_p}{K_i} * s}{1 + \frac{K_p}{K_i} * s + \frac{1}{K_i} * s^2}$$

avec $\theta$ la position du rotor, $\hat{\theta}$ la position estimée du rotor par la première boucle à verrouillage de phase, s le paramètre de Laplace, $K_p$ le coefficient proportionnel du régulateur proportionnel intégral, $K_i$ le coefficient du régulateur proportionnel intégral.

En effet, la première boucle à verrouillage de phase permet d'écrire la relation suivante :

$$\hat{\theta}(s) = \frac{1}{s} * \left( K_p + \frac{K_i}{s} \right) * \epsilon(s)$$

Au moyen d'une approximation linéaire telle que

$$\epsilon = \sin(\theta - \hat{\theta}) \approx \theta - \hat{\theta}$$

on peut obtenir l'équation suivante :

$$\hat{\theta}(s) = \frac{1}{s} * \left( K_p + \frac{K_i}{s} \right) * (\theta(s) - \hat{\theta}(s))$$

Ce qui permet d'obtenir la fonction de transfert décrite ci-dessus.

Selon un aspect de l'invention, les coefficients $K_p$ et $K_i$ vérifient les inéquations suivantes $K_p>0$ et $K_i>0$ pour que la boucle à verrouillage de phase soit stable.

La fréquence naturelle de la boucle à verrouillage de phase $\omega_{PLL}$ vaut $\omega_{PLL} = \sqrt{K_i}$.

Pour une bonne performance de la boucle à verrouillage de phase, on détermine les coefficients $K_p$ et $K_i$ pour que le facteur de qualité défini $m_{PLL}$, tel que défini ci-dessous, soit proche de 1.

$$m_{PLL} = \frac{\omega_{PLL}}{2} * \frac{K_p}{K_i}$$

Pour le premier mode de réalisation, la position et/ou la vitesse du rotor estimées sont obtenues par la première boucle à verrouillage de phase.

Pour le deuxième mode de réalisation, on met en œuvre les étapes 2) à 5) décrites ci-dessous.

2. Détermination de la convergence de l'observateur des harmoniques

Lors de cette étape, on détermine la convergence de l'observateur d'état des harmoniques de la boucle fermée, de manière à pouvoir activer la correction des harmoniques uniquement dans le cas où le l'observateur d'état des harmoniques est convergent. Ainsi, on ne conserve que des bonnes estimations des harmoniques et on évite de réaliser des corrections basées sur des valeurs non convergées, ce qui permet d'éviter les imprécisions et les erreurs de détermination de la position et/ou de la vitesse du rotor. Ainsi, la détermination de la position et/ou de la vitesse de rotation du rotor s'en trouve améliorée.

On peut déterminer la convergence de l'observateur d'état des harmoniques par tout moyen.

Selon un mode de réalisation de l'invention, on peut déterminer la convergence de l'observateur d'état des harmoniques au moyen de l'équation suivante :

$$\sqrt{|y_a - \hat{y}_a|^2 + |y_b - \hat{y}_b|^2} < \varepsilon$$

Avec $\varepsilon$ un seuil prédéterminé, $y_a$ et $y_b$ les signaux de mesure et $\hat{y}_a$ et $\hat{y}_b$ les signaux estimés reconstruits à partir des harmoniques déterminés par l'observateur d'état des harmoniques et la position déterminée par la première boucle à verrouillage de phase.

Selon un mode de réalisation de l'invention, on peut déterminer la convergence de l'observateur lorsque l'équation ci-dessus est vérifiée sur un intervalle de temps constant ou variable, par exemple sur un ou plusieurs tours électriques.

3. Correction des harmoniques observées

Lors de cette étape, on corrige les harmoniques observées à l'aide de la première boucle à verrouillage de phase, afin de les synchroniser à la seconde boucle à verrouillage de phase. Dans le cas général, les positions électriques des deux boucles à verrouillage de phase sont différentes d'une quantité notée $\Delta\theta_{PLL}$. La position de référence, notée ici $\theta$, est estimée par la seconde boucle à verrouillage de phase, qui a une cinématique plus rapide celle de la première boucle à verrouillage de phase. L'observateur est considéré comme convergent. On a alors, par exemple pour le signal sinusoïdal noté a :

$$\hat{y}_{ka} = y_{ka}$$

$$\hat{L}_{k1a_{PLL1}} \sin\left(k\widehat{\theta_{PLL1}}\right) + \hat{L}_{k2a_{PLL1}} \cos\left(k\widehat{\theta_{PLL1}}\right) = L_{ka} * \sin(k\theta + \phi_{ka})$$

Soit :

$$\hat{L}_{k1a_{PLL1}} = L_{ka} * \cos(k\Delta\theta_{PLL} + \phi_{ak}) \text{ et } \hat{L}_{k2a_{PLL1}} = L_{ka} * \sin(k\Delta\theta_{PLL} + \phi_{ak})$$

On cherche les valeurs des harmoniques associées à la seconde boucle à verrouillage de phase selon :

$$\hat{L}_{k1a_{PLL2}} = L_{ka} * \cos(\phi_{ak}) \quad \text{et} \quad \hat{L}_{k2a_{PLL2}} = L_{ka} * \sin(\phi_{ak})$$

On obtient par calcul :

$$\hat{L}_{k1a_{PLL2}} = \hat{L}_{k1a_{PLL1}} \cos(k\Delta\theta_{PLL}) + \hat{L}_{k2a_{PLL1}} \sin(k\Delta\theta_{PLL})$$

$$\hat{L}_{k2a_{PLL2}} = \hat{L}_{k2a_{PLL1}} \cos(k\Delta\theta_{PLL}) - \hat{L}_{k1a_{PLL1}} \sin(k\Delta\theta_{PLL})$$

On peut remarquer que le calcul ci-dessus consiste, pour chaque harmonique, en une rotation compensatoire des harmoniques observées, d'angle égal à l'écart d'angle observé par les deux boucles à verrouillage de phase multiplié par l'ordre de l'harmonique considéré.

Selon un mode de réalisation de l'invention, la détermination de la quantité $\Delta\theta_{PLL}$ peut se faire comme décrit ci-après. On rappelle qu'on a posé par définition ($y_{1a}$ est la référence de phase du système) :

$$y_{1a} = L_{11a} * \sin(\theta)$$

Donc $L_{12a}$ est égal à 0 par définition de même que $\phi_{a1}$.

Reprenant l'équation $\hat{L}_{k2aPLL1} = L_{ka} * \sin(k\Delta\theta_{PLL} + \phi_{ak})$, appliquée à l'harmonique 1, on trouve : $\hat{L}_{12aPLL1} = L_{ka} * \sin(\Delta\theta_{PLL})$, et similairement : $\hat{L}_{11PLL1} = L_{ka} * \cos(\Delta\theta_{PLL})$, d'où l'on peut calculer $L_{ka}$ et aussi $\Delta\theta_{PLL}$.

## 4. Correction des signaux de mesure

Lors de cette étape, on corrige en continu les signaux de mesure de manière à éliminer les effets des harmoniques déterminés à l'étape 1) et corrigés à l'étape 3), uniquement lorsque l'observateur d'état des harmoniques a été déterminé convergent à l'étape 2). En d'autres termes, on active la correction des signaux de mesure lorsque l'observateur d'état des harmoniques donne des observations fiables.

Lorsque l'observateur d'état des harmoniques n'est pas convergent, les signaux de mesure sont corrigés à l'aide des dernières valeurs observées des harmoniques lorsque l'observateur était convergent, et les signaux sont utilisés dans l'étape 5).

Selon un mode de réalisation de l'invention, on peut corriger, en continu, les signaux de mesure par un filtrage des harmoniques déterminés aux étapes 1) et 3).

Le filtrage des harmoniques dans les signaux de mesure s'obtient selon

$$y_c = y - L_{0a} - L_{21a}\sin(2\theta) - L_{22a}\cos(2\theta) - L_{31a}\sin(3\theta) - L_{32a}\cos(3\theta) - \cdots$$
$$- L_{n1a}\sin(n\theta) - L_{n2a}\cos(n\theta)$$

Selon un mode de réalisation de l'invention, on peut ensuite corriger le déphasage, l'amplitude et de l'offset des signaux $y_c$, par une méthode identique à celle utilisée lors de l'étape 1)

## 5. Détermination de la position et/ou la vitesse du rotor

Lors de cette étape, on détermine la position et/ou la vitesse du rotor au moyen d'une deuxième boucle à verrouillage de phase à partir des signaux de mesure corrigés lorsque l'observateur d'état des harmoniques est convergent (en sortie de l'étape 3), et à partir des signaux de mesure non corrigés lorsque l'observateur d'état des harmoniques est divergent.

La deuxième boucle à verrouillage de phase peut avoir la même structure que la première boucle à verrouillage de phase (conformément à la figure 3). Les éléments constitutifs et la fonction de transfert sont identiques à ceux décrits à l'étape 1). Toutefois, les coefficients du régulateur PI peuvent être différents. En particulier, le coefficient intégral $K_i$ de la première boucle à verrouillage de phase peut être inférieur au coefficient intégral $K_i$ de la deuxième boucle à verrouillage de phase. Le coefficient intégral $K_i$ de la première boucle à verrouillage de phase peut être lié à la résonance du système mécanique, alors que le coefficient intégral $K_i$ de la deuxième boucle à verrouillage de phase peut dépendre de la bande passante électrique. De cette manière, la première boucle à verrouillage de phase a une cinématique plus lente que la deuxième boucle à verrouillage de phase.

En outre, l'invention concerne un procédé de contrôle d'une machine électrique, la machine électrique comprenant un capteur de position angulaire du rotor de la machine électrique. Le capteur de position génère un signal cosinusoïdal et un signal sinusoïdal. Le procédé de contrôle comporte les étapes suivantes :

a) On détermine la position et/ou la vitesse du rotor au moyen du procédé de détermination de la position et/ou la vitesse du rotor selon une quelconque des variantes ou des combinaisons de variantes décrites ci-dessus, le procédé étant appliqué aux signaux de mesure du capteur de position ; et
b) On contrôle la machine électrique en fonction de la position et/ou la vitesse déterminée.

Selon un mode de réalisation de l'invention, on peut contrôler notamment le couple, ou la vitesse de rotation de la machine électrique.

L'invention concerne également un procédé de surveillance d'une machine électrique, la machine électrique comprenant un capteur de position angulaire du rotor de la machine électrique. Le capteur de position génère un signal cosinusoïdal et un signal sinusoïdal. Le procédé de surveillance comporte les étapes suivantes :

a) On détermine la position et/ou la vitesse du rotor au moyen du procédé de détermination de la position et/ou la vitesse du rotor selon une quelconque des variantes ou des combinaisons de variantes décrites ci-dessus, le procédé étant appliqué aux signaux de mesure du capteur de position ; et
b) On surveille la machine électrique en fonction de la position et/ou la vitesse déterminée.

Selon un mode de réalisation de l'invention, le procédé de surveillance peut comporter une étape de diagnostic d'un fonctionnement anormal de la machine électrique. Dans ce cas, le procédé de surveillance peut comporter une étape de contrôle de machine électrique afin de prendre en compte le fonctionnement anormal de la machine électrique. Par exemple, le contrôle en cas de fonctionnement anormal de la machine électrique peut consister en un arrêt de la machine électrique.

Comme il va de soi, l'invention ne se limite pas aux seules formes de réalisation des étapes décrites, décrites ci-dessus à titre d'exemple, elle embrasse au contraire toutes les variantes de réalisation.

## Exemples

Les caractéristiques et avantages du procédé selon l'invention apparaîtront plus clairement à la lecture de l'exemple d'application ci-après.

Pour cet exemple, on simule le procédé de détermination de la position et de la vitesse du rotor selon le deuxième mode de réalisation de l'invention. Pour cette simulation, on considère des signaux de mesure théoriques de la forme :

$$y_a = 0.95 * \sin(\omega t) + 0.05 + 0.09 * \sin(2\omega t) - 0.04 * \cos(2\omega t) + 0.02 * \sin(3\omega t) + w_a,$$

$y_b = 1.05 * \cos(\omega t + \phi) + 0.03 - 0.086 * \sin(2\omega t) + 0.051 * \cos(2\omega t) -- 0.025 * \cos(3\omega t) + w_b,$

Pour cet exemple, le déphasage fondamental $\Phi$ vaut 3°, les bruits sont notés $w_a$ et $w_b$, et le gain de l'observateur d'état des harmoniques $\alpha$ vaut 10.

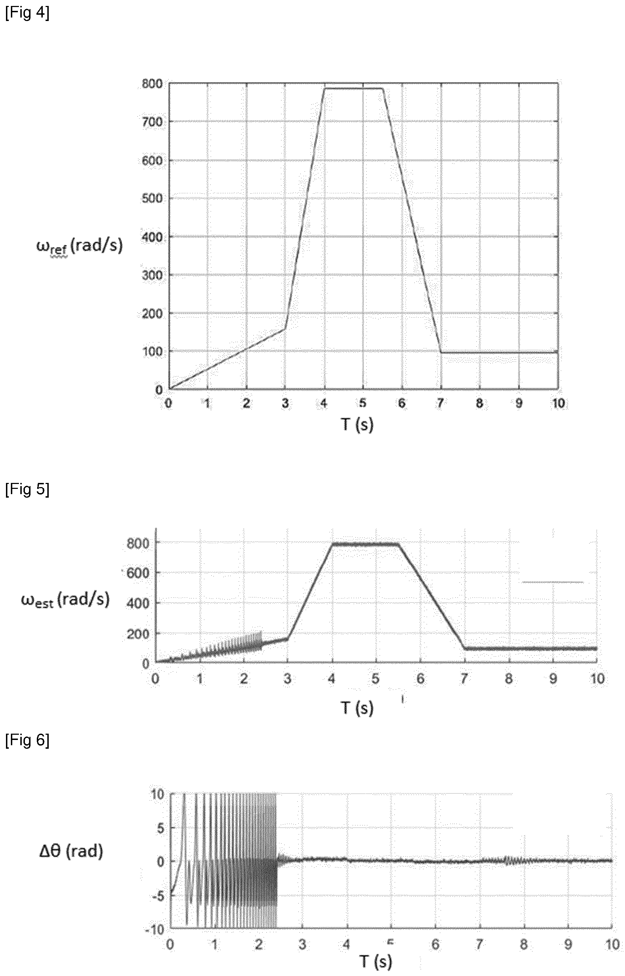

La figure 4 illustre l'évolution de la vitesse de rotation de référence $\omega_{ref}$ en rad/s en fonction du temps T en s pour la simulation. La vitesse de rotation $\omega_{ref}$ considérée comporte cinq phases : une première phase entre 0 et 3s avec une faible augmentation de la vitesse de rotation $\omega_{ref}$, une deuxième phase entre 3 et 4s avec une forte augmentation de la vitesse de rotation $\omega_{ref}$, une troisième phase entre 4 et 5,5 s de stabilité de la vitesse de rotation $\omega_{ref}$, une quatrième phase entre 5,5 et 7s de forte décroissance de la vitesse de rotation $\omega_{ref}$, et une cinquième phase entre 7 et 10 s de stabilité de la vitesse de rotation $\omega_{ref}$.

Pour la simulation, on utilise pour les deux boucles à verrouillage de phase selon la structure illustrée en figure 3. Pour la première boucle à verrouillage de phase, on choisit une fréquence naturelle $\omega_{PLL}$ de 60 rad/s, ce qui implique un coefficient intégral $K_i$ de 3600. Pour la deuxième boucle à verrouillage de phase, on choisit une fréquence naturelle $\omega_{PLL}$ de 400 rad/s, ce qui implique un coefficient intégral $K_i$ de 160000. Pour la première boucle à verrouillage de phase, le

coefficient proportionnel $K_p$ vaut 120. Pour la deuxième boucle à verrouillage de phase, le coefficient proportionnel $K_p$ vaut 800. Ainsi, pour chaque boucle à verrouillage de phase, le facteur de qualité $m_{PLL}$ est égal à 1.

Pour cet exemple, la figure 5 illustre la vitesse de rotation estimée $\omega_{est}$ en rad/s par le procédé selon l'invention en fonction du temps T en s, en sortie de la deuxième boucle à verrouillage de phase. La figure 6 illustre la différence $\Delta\theta$ en rad entre l'angle estimé par le procédé selon l'invention et l'angle de référence en fonction du temps T en s, en sortie de la deuxième boucle à verrouillage de phase. Dans un premier temps, on observe que la vitesse estimée est similaire à la vitesse de référence. On observe également que dans la zone à basse vitesse (jusqu'à environ 85 rad/s), l'observateur des harmoniques n'est pas encore activé, il existe alors une grande erreur d'estimation. Toutefois, dès que la vitesse de rotation atteint le seuil de 85 rad/s (ce seuil correspond sensiblement à $\sqrt{2}$ fois la fréquence naturelle de la première boucle à verrouillage de phase), l'observateur des harmoniques fonctionne bien, ce qui implique la convergence de l'observateur des harmoniques, ce qui créée de bonnes estimations de la vitesse et de la position par la deuxième boucle à verrouillage de phase. En particulier, de la deuxième phase à la cinquième phase, les estimations de vitesse et de position restent fiables. On peut également remarquer que lorsque la vitesse de rotation baisse (quatrième phase), l'estimation de la vitesse et de la position reste encore bonne même si la vitesse de rotation est inférieure à $\sqrt{2}$ fois la fréquence naturelle de la deuxième boucle à verrouillage de phase.

Par conséquent, le procédé selon l'invention permet de déterminer de manière précise et fiable la position et la vitesse de rotation d'un rotor d'une machine électrique.

**Revendications**

1.  Procédé de détermination de la position et/ou de la vitesse d'un rotor d'une machine électrique au moyen d'un capteur de position (CAP) dudit rotor, ledit capteur de position (CAP) générant un signal cosinusoïdal et un signal sinusoïdal, mettant en oeuvre

    - une boucle fermée (BF) qui comporte un observateur d'état des harmoniques (OBS),
    - une correction d'un déphasage (COR$\Phi$) desdits signaux générés cosinusoïdal et sinusoïdal,
    - une première boucle à verrouillage de phase (PLL1),
    - ledit observateur d'état desdits harmoniques (OBS) reliant lesdits signaux générés cosinusoïdal et sinusoïdal et une valeur de ladite position du rotor estimée ($\theta_{obs}$) par ladite première boucle à verrouillage de phase (PLL1) auxdits harmoniques,
    - ladite correction d'un déphasage (COR$\Phi$) identifiant et corrigeant le déphasage desdits signaux générés cosinusoïdal et sinusoïdal au moyen desdits harmoniques déterminés par ledit observateur d'état desdits harmoniques (OBS),
    - ladite première boucle à verrouillage de phase (PLL1) estimant la position et/ou la vitesse dudit rotor à partir desdits signaux cosinusoïdal et sinusoïdal corrigés,

    **caractérisé en ce que**
    le procédé de détermination met en œuvre une deuxième boucle à verrouillage de phase (PPL2),

    - ladite deuxième boucle à verrouillage de phase (PLL2) déterminant ladite position et/ou ladite vitesse dudit rotor

    selon les étapes suivantes :

    a) On détermine les harmoniques desdits signaux générés cosinusoïdal et sinusoïdal au moyen dudit observateur d'état des harmoniques (OBS) de ladite boucle fermée (BF) qui comporte ledit observateur d'état desdits harmoniques (OBS), ladite correction dudit déphasage (COR$\Phi$) desdits signaux générés cosinusoïdal et sinusoïdal, et ladite première boucle à verrouillage de phase (PLL1) ;
    b) On détermine si ledit observateur d'état (OBS) desdits harmoniques est convergent ;
    c) On corrige en continu lesdits signaux (CORH) générés cosinusoïdal et sinusoïdal en mettant à jour lesdites harmoniques déterminées lorsque ledit observateur d'état desdits harmoniques est convergent ; et
    d) On détermine ladite position et/ou ladite vitesse dudit rotor au moyen de la deuxième boucle à verrouillage de phase (PLL2) à partir desdits signaux cosinusoïdal et sinusoïdal corrigés.

2.  Procédé de détermination de la position et/ou de la vitesse d'un rotor selon la revendication 1, dans lequel on détermine si ledit observateur d'état (OBS) desdits harmoniques est convergent en vérifiant l'équation :

$$\sqrt{|y_a - \hat{y}_a|^2 + |y_b - \hat{y}_b|^2} < \varepsilon$$ avec $y_a$ et $y_b$ respectivement lesdits signaux générés cosinusoïdal et sinusoïdal, $\hat{y}_a$ et $\hat{y}_b$ des signaux reconstruits au moyen d'une position estimée et $\varepsilon$ un seuil prédéterminé.

3. Procédé de détermination de la position et/ou de la vitesse d'un rotor selon l'une des revendications 1 ou 2, dans lequel lesdites première et deuxième boucles à verrouillage de phase (PLL1, PLL2) comprennent un régulateur proportionnel intégral (PI), et un intégrateur.

4. Procédé de détermination de la position et/ou la vitesse d'un rotor selon la revendication 3, dans lequel la fonction de transfert desdites première et deuxième boucles à verrouillage de phase (PLL1, PLL2) s'écrit :

$$\frac{\hat{\theta}(s)}{\theta(s)} = \frac{1 + \frac{K_p}{K_i} * s}{1 + \frac{K_p}{K_i} * s + \frac{1}{K_i} * s^2}$$

avec $\theta$ la position dudit rotor, $\hat{\theta}$ une position estimée dudit rotor, s le paramètre de Laplace, $K_p$ le coefficient proportionnel dudit régulateur proportionnel intégral, $K_i$ le coefficient dudit régulateur proportionnel intégral.

5. Procédé de détermination de la position et/ou de la vitesse d'un rotor selon la revendication 4, dans lequel ledit coefficient intégral $K_i$ de ladite première boucle à verrouillage de phase (PLL1) est inférieur audit coefficient intégral $K_i$ de ladite deuxième boucle à verrouillage de phase (PLL2).

6. Procédé de détermination de la position et/ou de la vitesse d'un rotor selon l'une des revendications précédentes, dans lequel on corrige (CORH) lesdits signaux cosinusoïdal et sinusoïdal par un filtrage desdits harmoniques déterminés, et par éventuellement une correction du déphasage desdits signaux cosinusoïdal et sinusoïdal.

7. Procédé de détermination de la position et/ou de la vitesse d'un rotor selon l'une des revendications précédentes, dans lequel ledit observateur d'état (OBS) desdits harmoniques met en œuvre une fonction de transfert :

$$\frac{\hat{y}_k}{y} = \frac{\dfrac{\alpha * s}{s^2 + (k * \omega)^2}}{1 + \sum_{k=0 \to n} \dfrac{\alpha * s}{s^2 + (k * \omega)^2}}$$

avec s le paramètre de Laplace, $\alpha$ un gain, k un ordre de l'harmonique considéré, n un nombre d'harmoniques desdits signaux cosinusoïdal et sinusoïdal, w la fréquence fondamentale, y le signal généré considéré parmi le signal cosinusoïdal et sinusoïdal, et $\hat{y}_k$ un harmonique estimé d'ordre k dudit signal généré considéré parmi le signal cosinusoïdal et sinusoïdal.

8. Procédé de détermination de la position et/ou de la vitesse d'un rotor selon la revendication 7, dans lequel ledit gain $\alpha$ est inférieur à ladite fréquence fondamentale, de préférence ledit gain $\alpha$ est inférieur au dixième de ladite fréquence fondamentale w.

9. Procédé de détermination de la position et/ou de la vitesse d'un rotor selon l'une des revendications 7 ou 8, dans lequel ledit observateur d'état (OBS) desdits harmoniques détermine en outre des coefficients fondamentaux desdits harmoniques et des offsets desdits signaux générés cosinusoïdal et sinusoïdal.

10. Procédé de détermination de la position et/ou de la vitesse d'un rotor selon la revendication 9, dans lequel on identifie ledit déphasage entre lesdits signaux générés cosinusoïdal et sinusoïdal aux moyens desdits coefficients fondamentaux desdits harmoniques au moyen d'une fonction arctangente.

11. Procédé de détermination de la position et/ou de la vitesse d'un rotor selon la revendication 10, dans lequel on détermine ledit déphasage $\Phi$ entre lesdits signaux générés cosinusoïdal et sinusoïdal au moyen de l'équation :

$$\phi = \mathrm{atan}\left(\frac{L_{1b} * \sin(\phi)}{L_{1b} * \cos(\phi)}\right)$$

$$L_{1b} * \sin(\phi) = -\hat{L}_{11b} * \cos(\Delta\theta) - \hat{L}_{12b} * \sin(\Delta\theta)$$

avec $L_{1b} * \cos(\phi) = \hat{L}_{12b} * \cos(\Delta\theta) - \hat{L}_{11b} * \sin(\Delta\theta)$, et avec $L_{1b}$ un coefficient fondamental d'un desdits signaux générés cosinusoïdal et sinusoïdal, $\hat{L}_{11b}$ et $\hat{L}_{12b}$ lesdits coefficients fondamentaux déterminés par ledit observateur d'état desdits harmoniques, $\Delta\theta$ une différence entre la position dudit rotor mesurée et la position dudit rotor estimé par ladite première boucle à verrouillage de phase (PLL1).

12. Procédé de détermination de la position et/ou de la vitesse d'un rotor selon l'une des revendications précédentes, dans lequel on corrige ledit déphasage (CORΦ) d'un desdits signaux générés cosinusoïdal et sinusoïdal au moyen de

$$y_{fb-correction} = L_{1b} * \frac{y_{fb} - \frac{y_{fa}}{L_{1a}} * (L_{1b} * \sin(\phi))}{(L_{1b} * \cos(\phi))}$$

l'équation $\qquad$ avec $y_{fb-correction}$ le fondamental dudit signal généré corrigé d'un desdits signaux générés cosinusoïdal et sinusoïdal, $L_{1a}$ et $L_{1b}$ les coefficients fondamentaux respectivement desdits signaux générés cosinusoïdal et sinusoïdal, $y_{fa}$ et $y_{fb}$ les fondamentaux respectivement desdits signaux générés mesurés cosinusoïdal et sinusoïdal, et Φ ledit déphasage.

13. Procédé de détermination de la position et/ou de la vitesse d'un rotor selon l'une des revendications précédentes, dans lequel ledit capteur de position est un capteur magnétostrictif, un capteur inductif, un encodeur, un capteur GMR, un capteur AMR, un capteur TMR ou un résolveur.

14. Procédé de contrôle d'une machine électrique, ladite machine électrique comprenant un capteur de position du rotor de ladite machine électrique, ledit capteur de position générant un signal cosinusoïdal et un signal sinusoïdal, dans lequel on met en œuvre les étapes suivantes :

a) On détermine ladite position et/ou ladite vitesse dudit rotor au moyen dudit procédé selon l'une des revendications précédentes et desdits signaux générés par ledit capteur de position ; et
b) On contrôle ladite machine électrique en fonction de ladite position et/ou de ladite vitesse prédéterminée.

**Patentansprüche**

1. Verfahren zur Bestimmung der Position und/oder der Geschwindigkeit eines Rotors einer elektrischen Maschine mit Hilfe eines Positionssensors (CAP) des Rotors, wobei der Positionssensor (CAP) ein Cosinussignal und ein Sinussignal erzeugt, wobei Folgendes umgesetzt wird:

- eine geschlossene Schleife (BF), die einen Zustandsbeobachter der Harmonischen (OBS) umfasst,
- eine Korrektur einer Phasenverschiebung (CORΦ) des erzeugten Cosinus- und Sinussignals,
- eine erste Phasenregelschleife (PLL1),
- wobei der Zustandsbeobachter der Harmonischen (OBS) das erzeugte Cosinus- und Sinussignal und einen Wert der durch die erste Phasenregelschleife (PLL1) geschätzten Position des Rotors ($\theta_{obs}$) mit den Harmonischen in Beziehung setzt,
- wobei die Korrektur einer Phasenverschiebung (CORΦ) die Phasenverschiebung des erzeugten Cosinus- und Sinussignals mit Hilfe der durch den Zustandsbeobachter der Harmonischen (OBS) bestimmten Harmonischen identifiziert und korrigiert,
- wobei die erste Phasenregelschleife (PLL1) die Position und/oder die Geschwindigkeit des Rotors anhand des korrigierten Cosinus- und Sinussignals schätzt, **dadurch gekennzeichnet, dass** das Verfahren zur Bestimmung eine zweite Phasenregelschleife (PPL2) umsetzt,
- wobei die zweite Phasenregelschleife (PLL2) die Position und/oder die Geschwindigkeit des Rotors gemäß den folgenden Schritten bestimmt:

a) Bestimmen der Harmonischen des erzeugten Cosinus- und Sinussignals mit Hilfe des Zustandsbeobachters der Harmonischen (OBS) der geschlossenen Schleife (BF), die den Zustandsbeobachter der Harmonischen (OBS), die Korrektur der Phasenverschiebung (CORΦ) des erzeugten Cosinus- und Sinussignals und die erste Phasenregelschleife (PLL1) umfasst;

b) Bestimmen, ob der Zustandsbeobachter (OBS) der Harmonischen konvergent ist;

c) kontinuierliches Korrigieren des erzeugten Cosinus-und Sinussignals (CORH) durch Aktualisierung der bestimmten Harmonischen, wenn der Zustandsbeobachter der Harmonischen konvergent ist; und

d) Bestimmen der Position und/oder der Geschwindigkeit des Rotors mit Hilfe der zweiten Phasenregelschleife (PLL2) anhand des korrigierten Cosinus- und Sinussignals.

2. Verfahren zur Bestimmung der Position und/oder der Geschwindigkeit eines Rotors nach Anspruch 1, wobei bestimmt wird, ob der Zustandsbeobachter (OBS) der Harmonischen konvergent ist, indem die folgende Gleichung überprüft wird: $\sqrt{|y_a - \hat{y}_a|^2 + |y_b - \hat{y}_b|^2} < \varepsilon$, wobei $y_a$ und $y_b$ das erzeugte Cosinus- bzw. Sinussignal sind, $\hat{y}_a$ und $\hat{y}_b$ mit Hilfe einer geschätzten Position rekonstruierte Signale sind und $\varepsilon$ eine vorbestimmte Schwelle ist.

3. Verfahren zur Bestimmung der Position und/oder der Geschwindigkeit eines Rotors nach einem der Ansprüche 1 oder 2, wobei die erste und die zweite Phasenregelschleife (PLL1, PLL2) einen Proportional-Integral-Regler (PI) und einen Integrator beinhalten.

4. Verfahren zur Bestimmung der Position und/oder der Geschwindigkeit eines Rotors nach Anspruch 3, wobei die Übertragungsfunktion der ersten und der zweiten Phasenregelschleife (PLL1, PLL2) wie folgt aussieht: $\dfrac{\hat{\theta}(s)}{\theta(s)} = \dfrac{1 + \frac{K_p}{K_i} * s}{1 + \frac{K_p}{K_i} * s + \frac{1}{K_i} * s^2}$ wobei θ die Position des Rotors ist, $\hat{\theta}$ eine geschätzte Position des Rotors ist, s der Laplace-Parameter ist, $K_p$ der Proportional-Koeffizient des Proportional-Integral-Reglers ist, $K_i$ der Koeffizient des Proportional-Integral-Reglers ist.

5. Verfahren zur Bestimmung der Position und/oder der Geschwindigkeit eines Rotors nach Anspruch 4, wobei der Integral-Koeffizient $K_i$ der ersten Phasenregelschleife (PLL1) kleiner als der Integral-Koeffizient $K_i$ der zweiten Phasenregelschleife (PLL2) ist.

6. Verfahren zur Bestimmung der Position und/oder der Geschwindigkeit eines Rotors nach einem der vorhergehenden Ansprüche, wobei das Cosinus- und Sinussignal durch eine Filterung der bestimmten Harmonischen und eventuell durch eine Korrektur der Phasenverschiebung des Cosinus- und Sinussignals korrigiert (CORH) werden.

7. Verfahren zur Bestimmung der Position und/oder der Geschwindigkeit eines Rotors nach einem der vorhergehenden Ansprüche, wobei der Zustandsbeobachter (OBS) der Harmonischen eine Übertragungsfunktion umsetzt: $\dfrac{\hat{y}_k}{y} = \dfrac{\frac{\alpha * s}{s^2 + (k * \omega)^2}}{1 + \sum_{k=0 \to n} \frac{\alpha * s}{s^2 + (k * \omega)^2}}$ wobei s der Laplace-Parameter ist, α eine Verstärkung ist, k eine Ordnung der betrachteten Harmonischen ist, n eine Anzahl von Harmonischen des Cosinus- und Sinussignals ist, ω die Grundfrequenz ist, y das betrachtete erzeugte Signal von dem Cosinus- und dem Sinussignal ist und $\hat{y}_k$ eine geschätzte Harmonische der Ordnung k des betrachteten erzeugten Signals von dem Cosinus- und dem Sinussignal ist.

8. Verfahren zur Bestimmung der Position und/oder der Geschwindigkeit eines Rotors nach Anspruch 7, wobei die Verstärkung α kleiner als die Grundfrequenz ist, wobei die Verstärkung α vorzugsweise kleiner als ein Zehntel der Grundfrequenz ω ist.

9. Verfahren zur Bestimmung der Position und/oder der Geschwindigkeit eines Rotors nach einem der Ansprüche 7 oder 8, wobei der Zustandsbeobachter (OBS) der Harmonischen ferner Grundkoeffizienten der Harmonischen und Offsets des erzeugten Cosinus- und Sinussignals bestimmt.

10. Verfahren zur Bestimmung der Position und/oder der Geschwindigkeit eines Rotors nach Anspruch 9, wobei die Phasenverschiebung zwischen dem erzeugten Cosinus- und Sinussignal mit Hilfe der Grundkoeffizienten der

# EP 4 078 802 B1

Harmonischen mit Hilfe einer Arkustangensfunktion identifiziert wird.

11. Verfahren zur Bestimmung der Position und/oder der Geschwindigkeit eines Rotors nach Anspruch 10, wobei die Phasenverschiebung $\Phi$ zwischen dem erzeugten Cosinus- und Sinussignal mit Hilfe der folgenden Gleichung bestimmt wird:

$$\phi = \text{atan}\left(\frac{L_{1b} * \sin(\phi)}{L_{1b} * \cos(\phi)}\right)$$

wobei

$$L_{1b} * \sin(\phi) = -\hat{L}_{11b} * \cos(\Delta\theta) - \hat{L}_{12b} * \sin(\Delta\theta)$$

$L_{1b} * \cos(\phi) = -\hat{L}_{12b} * \cos(\Delta\theta) - \hat{L}_{11b} * \sin(\Delta\theta)$, und wobei $L_{1b}$ ein Grundkoeffizient von einem von dem erzeugten Cosinus- und Sinussignal ist, $\hat{L}_{11b}$ und $\hat{L}_{12b}$ die durch den Zustandsbeobachter der Harmonischen bestimmten Grundkoeffizienten sind, $\Delta\theta$ eine Differenz zwischen der gemessenen Position des Rotors und der durch die erste Phasenregelschleife (PLL1) geschätzten Position des Rotors ist.

12. Verfahren zur Bestimmung der Position und/oder der Geschwindigkeit eines Rotors nach einem der vorhergehenden Ansprüche, wobei die Phasenverschiebung (COR$\Phi$) von einem von dem erzeugten Cosinus- und Sinussignal mit Hilfe der Gleichung $y_{\text{fb-Korrektur}} = L_{1b} * \dfrac{y_{\text{fb}} - \dfrac{y_{\text{fa}}}{L_{1a}} * (L_{1b} * \sin(\phi))}{(L_{1b} * \cos(\phi))}$ korrigiert wird, wobei $Y_{\text{fb-Korrektur}}$ der Grundton des korrigierten erzeugten Signals von einem von dem erzeugten Cosinus- und Sinussignal ist, $L_{1a}$ und $L_{1b}$ die Grundkoeffizienten des erzeugten Cosinus- bzw. Sinussignals sind, $y_{\text{fa}}$ und $y_{\text{fb}}$ die Grundtöne des gemessenen erzeugten Cosinus- bzw. Sinussignals sind und $\Phi$ die Phasenverschiebung ist.

13. Verfahren zur Bestimmung der Position und/oder der Geschwindigkeit eines Rotors nach einem der vorhergehenden Ansprüche, wobei der Positionssensor ein magnetostriktiver Sensor, ein induktiver Sensor, ein Kodierer, ein GMR-Sensor, ein AMR-Sensor, ein TMR-Sensor oder ein Resolver ist.

14. Verfahren zur Steuerung einer elektrischen Maschine, wobei die elektrische Maschine einen Positionssensor für den Rotor der elektrischen Maschine beinhaltet, wobei der Positionssensor ein Cosinussignal und ein Sinussignal erzeugt, wobei die folgenden Schritte umgesetzt werden:

    a) Bestimmen der Position und/oder der Geschwindigkeit des Rotors mit Hilfe des Verfahrens nach einem der vorhergehenden Ansprüche und der durch den Positionssensor erzeugten Signale; und
    b) Steuern der elektrischen Maschine in Abhängigkeit von der Position und/oder der vorbestimmten Geschwindigkeit.

## Claims

1. Method for determining the position and/or speed of a rotor of an electric machine by means of a position sensor (CAP) for sensing a position of said rotor, said position sensor (CAP) generating a cosinusoidal signal and a sinusoidal signal, implementing

    - a closed loop (BF) comprising a harmonics state observer (OBS),
    - a correction (COR$\Phi$) of a phase shift of said cosinusoidal and sinusoidal generated signals,
    - a first phase-locked loop (PLL1),
    - said harmonics state observer (OBS) relating said cosinusoidal and sinusoidal generated signals and a value of said rotor position ($\theta_{\text{obs}}$) estimated by said first phase-locked loop (PLL1) with said harmonics,
    - said correction (COR$\Phi$) of a phase shift identifying and correcting the phase shift of said cosinusoidal and sinusoidal generated signals by means of said harmonics determined by said harmonics state observer (OBS),
    - said first phase-locked loop (PLL1) estimating the position and/or speed of said rotor based on said corrected cosinusoidal and sinusoidal signals, **characterized in that** the determining method implements a second phase-locked loop (PPL2),
- said second phase-locked loop (PLL2) determining said position and/or speed of said rotor by carrying out the following steps:

a) the harmonics of said cosinusoidal and sinusoidal generated signals are determined by means of said harmonics state observer (OBS) of said closed loop (BF) comprising said harmonics state observer (OBS), said correction (CORΦ) of said phase shift of said cosinusoidal and sinusoidal generated signals, and said first phase-locked loop (PLL1);
b) it is determined whether said harmonics state observer (OBS) is converging;
c) said cosinusoidal and sinusoidal generated signals are continuously corrected (CORH) by updating said determined harmonics when said harmonics state observer is converging; and
d) said position and/or speed of said rotor is determined by means of the second phase-locked loop (PLL2) based on said corrected cosinusoidal and sinusoidal signals.

2. Method for determining the position and/or speed of a rotor according to Claim 1, wherein it is determined whether said harmonics state observer (OBS) is converging by checking whether the following equation is respected:

$$\sqrt{|y_a - \hat{y}_a|^2 + |y_b - \hat{y}_b|^2} < \varepsilon$$

with $y_a$ and $y_b$ said cosinusoidal and sinusoidal generated signals, respectively, $\hat{y}_a$ and $\hat{y}_b$ signals reconstructed by means of an estimated position and $\varepsilon$ a predetermined threshold.

3. Method for determining the position and/or speed of a rotor according to either of Claims 1 and 2, wherein said first and second phase-locked loops (PLL1, PLL2) comprise a proportional-integral regulator (PI), and an integrator.

4. Method for determining the position and/or speed of a rotor according to Claim 3, wherein the transfer function of said

$$\frac{\hat{\theta}(s)}{\theta(s)} = \frac{1 + \frac{K_p}{K_i} * s}{1 + \frac{K_p}{K_i} * s + \frac{1}{K_i} * s^2}$$

first and second phase-locked loops (PLL1, PLL2) is written: with θ the position of said rotor, $\hat{\theta}$ an estimated position of said rotor, s the Laplace parameter, $K_p$ the proportional coefficient of said proportional-integral regulator, and $K_i$ the integral coefficient of said proportional-integral regulator.

5. Method for determining the position and/or speed of a rotor according to Claim 4, wherein said integral coefficient $K_i$ of said first phase-locked loop (PLL1) is less than said integral coefficient $K_i$ of said second phase-locked loop (PLL2).

6. Method for determining the position and/or speed of a rotor according to any of the preceding claims, wherein said cosinusoidal and sinusoidal signals are corrected (CORH) by filtering said determined harmonics, and possibly by correcting the phase shift of said cosinusoidal and sinusoidal signals.

7. Method for determining the position and/or speed of a rotor according to any of the preceding claims, wherein said

$$\frac{\hat{y}_k}{y} = \frac{\frac{\alpha * s}{s^2 + (k * \omega)^2}}{1 + \sum_{k=0 \to n} \frac{\alpha * s}{s^2 + (k * \omega)^2}}$$

harmonics state observer (OBS) implements a transfer function: with s the Laplace parameter, $\alpha$ a gain, k an order of the harmonic in question, n a number of harmonics of said cosinusoidal and sinusoidal signals, $\omega$ the fundamental frequency, y the generated signal in question among the cosinusoidal and sinusoidal signals, and $\hat{y}_k$ an estimated harmonic of order k of said generated signal in question among the cosinusoidal and sinusoidal signals.

8. Method for determining the position and/or speed of a rotor according to Claim 7, wherein said gain $\alpha$ is less than said fundamental frequency, and preferably said gain $\alpha$ is less than one tenth of said fundamental frequency $\omega$.

9. Method for determining the position and/or speed of a rotor according to either of Claims 7 and 8, wherein said harmonics state observer (OBS) further determines fundamental coefficients of said harmonics and offsets of said cosinusoidal and sinusoidal generated signals.

10. Method for determining the position and/or speed of a rotor according to Claim 9, wherein said phase shift between said cosinusoidal and sinusoidal generated signals is identified by means of said fundamental coefficients of said harmonics using an arctangent function.

11. Method for determining the position and/or speed of a rotor according to Claim 10, wherein said phase shift $\Phi$ between said cosinusoidal and sinusoidal generated signals is determined by means of the equation: $\phi = $

$$\mathrm{atan}\left(\frac{L_{1b} * \sin(\phi)}{L_{1b} * \cos(\phi)}\right) \quad \text{with}$$

$$L_{1b} * \sin(\phi) = -\hat{L}_{11b} * \cos(\Delta\theta) - \hat{L}_{12b} * \sin(\Delta\theta)$$

$L_{1b} * \cos(\phi) = -\hat{L}_{12b} * \cos(\Delta\theta) - \hat{L}_{11b} * \sin(\Delta\theta)$, and with $L_{1b}$ a fundamental coefficient of one of said cosinusoidal and sinusoidal generated signals, $\hat{L}_{11b}$ and $\hat{L}_{12b}$ said fundamental coefficients determined by said harmonics state observer, $\Delta\theta$ a difference between the measured position of said rotor and the position of said rotor estimated by said first phase-locked loop (PLL1).

12. Method for determining the position and/or speed of a rotor according to any of the preceding claims, wherein said phase shift of one of said cosinusoidal and sinusoidal generated signals is corrected (COR$\Phi$) by means of the

$$y_{fb-correction} = L_{1b} * \frac{y_{fb} - \frac{y_{fa}}{L_{1a}} * (L_{1b} * \sin(\phi))}{(L_{1b} * \cos(\phi))}$$

equation with $y_{fb-correction}$ the fundamental of said corrected generated signal of one of said cosinusoidal and sinusoidal generated signals, $L_{1a}$ and $L_{1b}$ the fundamental coefficients of said cosinusoidal and sinusoidal generated signals, respectively, $y_{fa}$ and $y_{fb}$ the fundamentals of said cosinusoidal and sinusoidal measured generated signals, respectively, and $\Phi$ said phase shift.

13. Method for determining the position and/or speed of a rotor according to any of the preceding claims, wherein said position sensor is a magnetostrictive sensor, an inductive sensor, an encoder, a GMR sensor, an AMR sensor, a TMR sensor or a resolver.

14. Method for controlling an electric machine, said electric machine comprising a position sensor for sensing a position of the rotor of said electric machine, said position sensor generating a cosinusoidal signal and a sinusoidal signal, wherein the following steps are implemented:

 a) said position and/or speed of said rotor is determined by means of said method according to any of the preceding claims and of said signals generated by said position sensor; and
 b) said electric machine is controlled depending on said position and/or speed determined beforehand.

[Fig 1]

[Fig 2]

[Fig 3]

[Fig 4]

[Fig 5]

[Fig 6]

## RÉFÉRENCES CITÉES DANS LA DESCRIPTION

**Documents brevets cités dans la description**

- DE 102014226604
- DE 102016220188
- US 20190031046 A
- EP 2387145 A
- US 2017284826 A

**Littérature non-brevet citée dans la description**

- **OSOWSKI, S**. Neural network for estimation of harmonic components in a power system. *IEEE Generation, Transmission and Distribution*, 1992, 129-135
- **SIYU LENG, W. L.-Y**. Active Power Filter for Three-Phase Current. *IEEE American Control Conference*, 2009, 2140-2147